# EUROPEAN PATENT APPLICATION

(11) **EP 4 744 816 A1**
(43) Date of publication of application: **20.05.2026**
(21) Application number: 24879687.2
(22) Date of filing: 15.10.2024
(51) Int. Cl.: B23K 31/00, B23K 9/02

(54) **WELDED JOINT AND METHOD FOR MANUFACTURING SAME**

(30) Priority: 20.10.2023 JP 2023180808
(71) Applicant: JFE Steel Corporation, Tokyo, 100-0011 (JP)
(72) Inventor: TAKAKI, Yoshifumi, Tokyo 100-0011 (JP); SAKIMOTO, Takahiro, Tokyo 100-0011 (JP); HANDA, Tsunehisa, Tokyo 100-0011 (JP)
(74) Representative: Haseltine Lake Kempner LLP
(86) International application number: PCT/JP2024/036580
(87) International publication number: WO 2025/084262

(57) **Abstract**

The present invention relates to a welded joint of a floating offshore wind-power-generation equipment including a tower member, a float member, and a bracket. The present invention provides a welded joint exhibiting increased fatigue strength at a weld with weld beads extended onto the float member, and a method of manufacturing the same. A welded joint according to the present invention includes a first weld bead, a second weld bead, and a third weld bead. The first weld bead extends along one of short edges of a rectangular contact surface at which a bracket is in contact with a float member. The second weld bead and the third weld bead extend along two respective long edges of the rectangular contact surface and are each extended over a corresponding one of a starting end and a terminal end of the first weld bead onto the float member. Furthermore, it is preferable that a ratio M/N of an interval M between a distal end part of the second weld bead and a distal end part of the third weld bead and a length N of an extended portion of the second weld bead or the third weld bead be 2.0 or smaller.

## Description

### Technical Field

The present invention relates to a welded joint and a method of manufacturing the same, particularly to a welded joint exhibiting excellent fatigue strength, such as a welded joint part of a floating offshore wind-power-generation equipment at which a float member and another member are joined to each other via a bracket by gas-shielded arc welding, and to a method of manufacturing the same.

### Background Art

In recent years, in the field of offshore wind-power generation, floating offshore wind-power generation has been under examination because of its ease of installation even in waters with a depth of 50 m or more. Floating offshore wind-power-generation equipment is exposed to external forces such as ocean waves. Therefore, what is to be examined is to increase the fatigue life at the weld toes of welded joint parts of such equipment.

Accordingly, various technologies have been under examination for increasing the fatigue strength of a welded joint part of a large-scale structure such as an offshore wind-power-generation equipment. For example, in a weldedbeam structure according to Patent Literature 1 that is formed of a rib member and a face member, the rib member is attached at the ends thereof to a structural member by fillet welding formed on both sides thereof, and bead strings formed by the fillet welding are slightly extended onto the structural member, whereby a pair of extension bead strings connected to the structural member are formed. Furthermore, according to Patent Literature 1, the face member is attached to a lateral end part of the rib member by fillet welding formed on both sides of the lateral end part, and bead strings formed by the fillet welding are slightly extended on both sides of the lateral end part of the rib member, whereby a pair of extension bead strings connected to the rib member are formed. It is stated that these extension bead strings suppress the occurrence of fatigue cracks at the weld toes.

A weld bead structure disclosed in Patent Literature 2 is formed with one surface of one plate and an end face of an other plate butted against each other, and includes two weld bead parts and two extension weld bead parts. The weld bead parts are formed on two respective sides of the end face in fillet welding. The extension weld bead parts are formed in welding in which the weld bead parts on the two respective sides are extended on the one surface from an end of the other plate. The weld bead structure disclosed in Patent Literature 2 further includes an end weld bead part provided between the two extension weld bead parts. The end weld bead part is formed by additionally welding the one plate and the end of the other plate to each other. In such a configuration, the weld bead toes of each of the weld beads are located away from a portion of the weld bead that is subjected to a large stress and therefore tends to cause a defect. It is stated that the durability of the weld is thus increased.

A welded joint disclosed in Patent Literature 3 is a boxing joint formed between a gusset and a main plate and includes a first weld bead extending along a short edge of the gusset and being extended on the main plate from both ends of the short edge, and second and third weld beads extending along respective long edges of the gusset and being extended over the first weld bead onto the main plate. It is stated that such a configuration provides a boxing joint exhibiting increased fatigue strength with a low cost and stability.

### Citation List

### Patent Literature

PTL 1: Japanese Unexamined Patent Application Publication No. 8-155634
PTL 2: Japanese Unexamined Patent Application Publication No. 9-253843
PTL 3: Japanese Unexamined Patent Application Publication No. 2018-158380

### Summary of Invention

### Technical Problem

It is stated that the methods disclosed in Patent Literatures described above are effective in increasing the fatigue strength of a welded joint part. As for a welded joint part of a large-scale structure such as an offshore wind-power-generation equipment, however, it is not clarified whether the above methods are effective in increasing the fatigue strength of a welded joint part between members, including a tower part; a float part; and a bracket, of a floating offshore wind-power-generation equipment that is to be subjected to not only local stress concentration but also structural stress concentration.

Hence, the present inventors have explored for a method of increasing the fatigue strength of a welded joint of a floating offshore wind-power-generation equipment that is to be subjected to not only local stress concentration but also structural stress concentration. Consequently, the present inventors have found that controlling the shapes and arrangement of weld beads increases the fatigue strength.

The present invention is to solve the problem in the related art, regarding a welded joint part of a large-scale structure such as a welded joint of a floating offshore wind-power-generation equipment including a tower member; a float member; and a bracket, with weld beads extended onto the float member. Accordingly, an object of the present invention is to provide a welded joint exhibiting increased fatigue strength and a method of manufacturing the same. Solution to Problem

To achieve the above object, the present inventors first made mock structures of a welded joint that simulated the actual structure of a floating offshore wind-power-generation equipment. Welded joints made as mock structures included one obtained by normal fillet welding performed on relevant members, and one having extended weld beads. These welded joints were subjected to a fatigue test. Through a comparison between the results of the fatigue test for the welded joints, it has been found that the welded joint having extended weld beads exhibits increased fatigue strength.

The present invention has been completed on the basis of the above findings and through additional examination. The essence of the present invention is as follows.
[1] A welded joint including a first member; a second member butted against a surface of the first member; and a supporting member provided in contact with the first member and the second member,
   the welded joint further including a first weld bead; a second weld bead; and a third weld bead,
   wherein the first weld bead extends along one of short edges of a first rectangular contact surface at which the supporting member is in contact with the first member,
   wherein the second weld bead and the third weld bead extend along respective long edges of the first rectangular contact surface and are each extended over a corresponding one of a starting end and a terminal end of the first weld bead onto the first member.
[2] The welded joint according to [1], wherein a ratio M/N of an interval M between a distal end part of the second weld bead and a distal end part of the third weld bead and a length N of an extended portion of the second weld bead or an extended portion of the third weld bead is 2.0 or smaller.
[3] The welded joint according to [1] or [2], wherein a length N of an extended portion of the second weld bead and an extended portion of the third weld bead falls within a range of 4.0 mm to 60.0 mm.
[4] The welded joint according to [1] or [2], further including a fourth weld bead extending along long edges and a short edge of a second rectangular contact surface at which the supporting member is in contact with the second member.
[5] The welded joint according to [1] or [2], to be used as a welded joint of a floating offshore wind-power-generation equipment,
   wherein the first member is a float member; the second member is a tower member; and the supporting member is a bracket.
[6] A method of manufacturing a welded joint, the welded joint including a first member; a second member butted against a surface of the first member; and a supporting member provided in contact with the first member and the second member,
   the welded joint further including a first weld bead; a second weld bead; and a third weld bead,
   the method including:
      forming the first weld bead along one of short edges of a first rectangular contact surface at which the supporting member is in contact with the first member; and
      forming the second weld bead and the third weld bead along respective long edges of the first rectangular contact surface and extending each of the second weld bead and the third weld bead over a corresponding one of a starting end and a terminal end of the first weld bead onto the first member.
[7] The method of manufacturing a welded joint according to [6], wherein a ratio M/N of an interval M between a distal end part of the second weld bead and a distal end part of the third weld bead and a length N of an extended portion of the second weld bead or an extended portion of the third weld bead is 2.0 or smaller.
[8] The method of manufacturing a welded joint according to [6] or [7], wherein a length N of an extended portion of the second weld bead and an extended portion of the third weld bead falls within a range of 4.0 mm to 60.0 mm.
[9] The method of manufacturing a welded joint according to [6] or [7],
   wherein the welded joint further includes a fourth weld bead,
   the method further including forming the fourth weld bead along long edges and a short edge of a second rectangular contact surface at which the supporting member is in contact with the second member.
[10] The method of manufacturing a welded joint according to [6] or [7],
   wherein the welded joint is to be used as a welded joint of a floating offshore wind-power-generation equipment, and
   wherein the first member is a float member; the second member is a tower member; and the supporting member is a bracket.

### Advantageous Effects of Invention

According to the present invention, in a welded joint part of a large-scale structure such as a welded joint of a floating offshore wind-power-generation equipment including a tower member; a float member; and a bracket, weld beads are extended onto the float member. Thus, a welded joint exhibiting increased fatigue strength and a method of manufacturing the same are provided. Furthermore, the present invention produces industrially remarkable advantageous effects.

### Brief Description of Drawings

[Fig. 1] Fig. 1 is a schematic perspective view illustrating an overview of a welded joint (mock structure) of a floating offshore wind-power-generation equipment according to the present invention.
[Fig. 2] Figs. 2(a) and 2(b) are schematic diagrams illustrating an overview of the welded joint (mock structure) illustrated in Fig. 1, in plan view in Fig. 2(a) and in front view in Fig. 2(b).
[Fig. 3] Fig. 3 is a schematic enlarged plan view of part of the welded joint (mock structure) illustrated in Fig. 1.
[Fig. 4] Figs. 4(a) to 4(d) are schematic diagrams illustrating exemplary steps included in a method of manufacturing the welded joint (mock structure) illustrated in Fig. 1.
[Fig. 5] Fig. 5 is a schematic diagram illustrating how the welded joint (mock structure) illustrated in Fig. 1 is secured in a fatigue test.

### Description of Embodiments

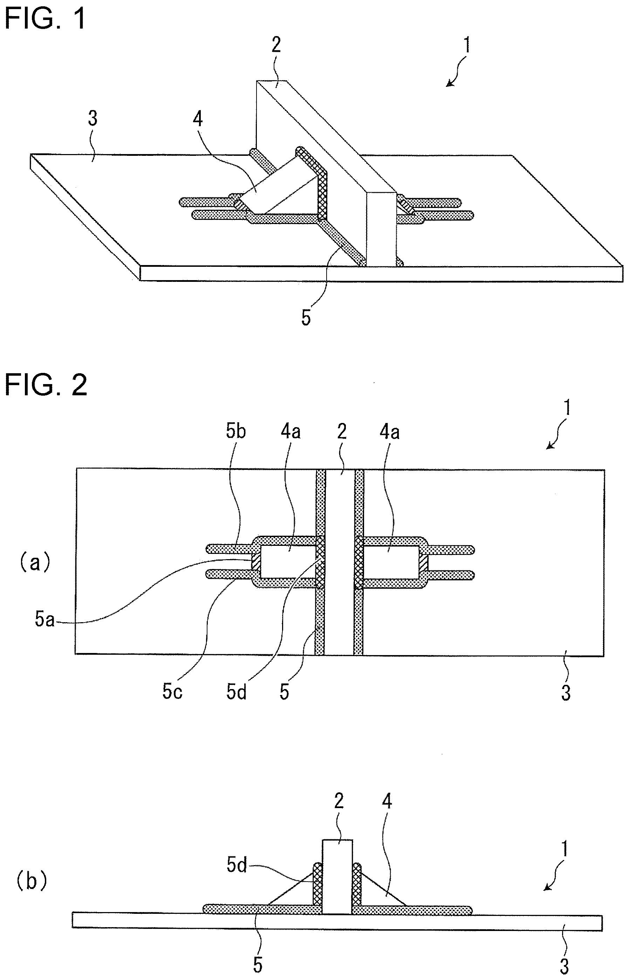

As illustrated in Figs. 1 and others, the present invention relates to a welded joint including a first member; a second member butted against a surface (a front surface, for example) of the first member; and a supporting member provided in contact with the first member and the second member, and to a method of manufacturing the same. The second member is held between a pair of supporting members. It is preferable that the welded joint according to the present invention be used as a welded joint of, for example, a floating offshore wind-power-generation equipment. The following description takes a welded joint of a floating offshore wind-power-generation equipment as an embodiment. In the present embodiment, the first member is a float member 3 to be described below, the second member is a tower member 2 to be described below, and the supporting member is a bracket 4 to be described below.

The present invention relates to a welded joint of a floating offshore wind-power-generation equipment that exhibits increased fatigue strength with weld beads extended onto a float member, and to a method of manufacturing the same.

An embodiment of the present invention will now be described.

### [Floating Offshore Wind-Power-Generation Equipment]

First, a floating offshore wind-power-generation equipment will be overviewed.

Wind-power generation is one of the renewable energies. Offshore wind-power generation that is constructed on the sea is categorized into a fixed-bottom type and a floating type. Floating offshore wind-power generation is constructed in waters with a depth of 50 m or more. A floating offshore wind-power-generation equipment has a construction in which a structure carrying a wind turbine is floated on the sea while being connected with a chain or the like. The structure is constituted by a tower part that holds the wind turbine (wind-power generator) hung thereon, and a float part that floats on the sea with the tower part carried thereon. The tower part and the float part, which serves as a base, are welded to each other. It is an important issue to increase the fatigue life of a welded joint part formed between the two.

### [Mock Structure of Welded Joint of Floating Offshore Wind-Power-Generation Equipment]

To examine a joint structure that exhibits an increased fatigue life as a welded joint of the floating offshore wind-power-generation equipment described above, a welded joint having a mock structure mocking the actual structure of the floating offshore wind-power-generation equipment was made, and a mock test regarding the increase in the fatigue life was conducted. The mock structure of the welded joint that was used in the test is illustrated in Fig. 1. A welded joint (i.e., the mock structure) 1 has a structure in which a cuboidal tower member 2 is placed on a float member 3 and is held by two brackets 4 from two respective sides of the tower member 2.
Joints between the members are subjected to gas-shielded arc welding to make mainly fillet welds, and weld beads 5 are formed at the boundaries between the members.

The tower member 2 is a cuboid. The shape of the tower member 2 is not particularly limited. In one example of the mock structure, the tower member 2 has, for example, long edges of the bottom face (plate width) that are each sized 100 mm to 200 mm, short edges of the bottom face (plate thickness) that are each sized 50 mm to 60 mm, and a height (plate length) of 250 mm to 400 mm. The material to be named for the tower member 2 is a YP460 material, a YP355 material, or the like.

The float member 3 has a planar shape with a certain thickness. The shape of the float member 3 is not particularly limited. In one example of the mock structure, the float member 3 has, for example, a width of the planar shape (plate width) of 100 mm to 200 mm, a thickness of the planar shape (plate thickness) of 25 mm to 40 mm, and a length of the planar shape (plate length) of 800 mm to 1000 mm. The material to be named for the float member 3 is the same as the material for the tower member 2.

The brackets 4 are each a triangular prism having a right-triangular bottom face. Two of the peripheral faces of the triangular prism that form a right angle therebetween are in contact with the tower member 2 and the float member 3. Fig. 2(a) is a plan view of the mock structure 1 seen from above. Fig. 2(a) illustrates a rectangular contact surface 4a (hereinafter also referred to as "first rectangular contact surface"), at which the bracket 4 is in contact with the float member 3. The shape of the bracket 4 is not particularly limited. In one example of the mock structure, the rectangular contact surface 4a of the bracket 4 has, for example, long edges each sized 200 mm to 400 mm and short edges each sized 30 mm to 40 mm. It is preferable that the material for the bracket 4 be the same as the material for the tower member 2 and the float member 3.

### [Weld Beads 5]

In one embodiment, the weld beads 5, which are formed mainly in fillet welding, include a first weld bead 5a; a second weld bead 5b; and a third weld bead 5c, which are formed through a welding process to be described below. It is preferable that the weld beads 5 further include a fourth weld bead 5d. Such a structure is illustrated in plan view in Fig. 2(a) and in front view in Fig. 2(b). The weld beads 5 illustrated in Figs. 2(a) and 2(b) are constituted by the first to fourth weld beads.

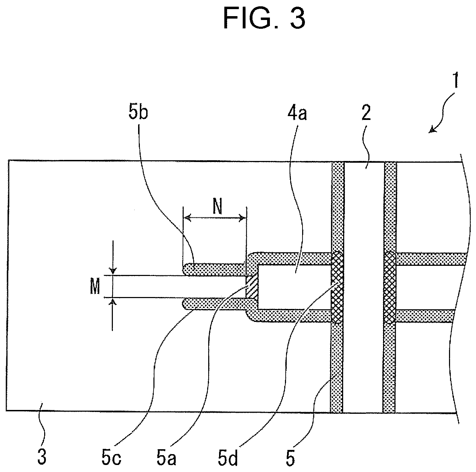

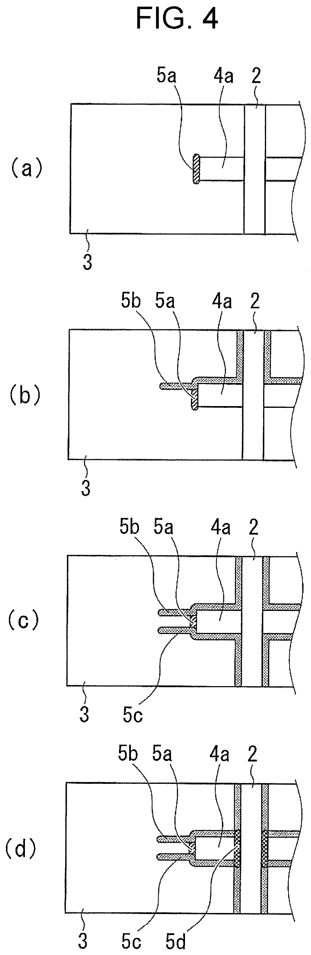

In Fig. 2(a), the bracket is illustrated as the rectangular contact surface (first rectangular contact surface) 4a at which the bracket is in contact with the float member 3. The same applies to Fig. 3 and Figs. 4(a) to 4(d) to be referred to below.

It is preferable that the welding method be gas-shielded arc welding.

### [First Weld Bead 5a]

The first weld bead 5a is a weld bead extending along one of the short edges of the rectangular contact surface 4a of the bracket 4 (see Figs. 4(a) and others).

Weld toe parts of the weld bead extending along the short edge (namely, the first weld bead 5a) are regions where the most localized stress concentration tends to occur, which may cause fatigue cracks. In the case of a floating offshore wind-power-generation equipment to which the present invention is applied, not only local stress concentration but also stress concentration related to the structure of wind-power generation occurs, which increases the likeliness of fatigue cracks. To suppress the occurrence of such fatigue cracks, it is important to form the second weld bead 5b and the third weld bead 5c to be described below and to extend these weld beads onto the float member 3.

### [Second Weld Bead 5b and Third Weld Bead 5c]

The second weld bead 5b is a weld bead extending along one of the long edges of the rectangular contact surface 4a of the bracket 4 and being extended over a corresponding one of the starting end and the terminal end of the first weld bead 5a onto the float member 3 (see Figs. 4(b) and others). The third weld bead 5c is a weld bead extending along the other of the long edges of the rectangular contact surface 4a and being extended over a corresponding one of the terminal end and the starting end of the first weld bead 5a onto the float member 3 (see Figs. 4(c) and others).

For example, if the second weld bead 5b is formed over the starting end of the first weld bead 5a, the third weld bead 5c is formed over the terminal end of the first weld bead 5a.

In Fig. 2(a), the second weld bead 5b and the third weld bead 5c are in vertical symmetry, with the second weld bead 5b being located on the upper side of the rectangular contact surface 4a and the third weld bead 5c being located on the lower side. The arrangement may be vertically inverted.

In the above expression, to form "over a corresponding one of the terminal end and the starting end of the first weld bead" encompasses not only to form over a corresponding one of the terminal end and the starting end of the first weld bead but also to form over another part of the first weld bead after being formed "over" the end. As illustrated in Figs. 2(a) and others, the second weld bead 5b and the third weld bead 5c are not linear, with the interval between the beads being reduced. Thus, the stress concentration in regions of the beads that are located at the short edge is made small.

### [Interval M between Distal End Part of Second Weld Bead and Distal End Part of Third Weld Bead]

As illustrated in Fig. 3, the interval between a distal end part of the second weld bead 5b and a distal end part of the third weld bead 5c is denoted by M. Herein, the interval M between the distal ends refers to the interval between respective weld toe parts, facing each other, of the distal end parts of the extended second weld bead and the extended third weld bead. To increase the fatigue strength of the welded joint, it is preferable that the ratio of the interval M and a length N, to be described below, of the extended portion of the second weld bead or the third weld bead, i.e., M/N, be 2.0 or smaller. If the ratio M/N of the interval M and the length N of the extended portion exceeds 2.0, fatigue cracks may occur, resulting in an insufficient increase in the fatigue strength. It is more preferable that the ratio M/N of the interval M and the length N of the extended portion be 1.8 or smaller.

Even if the interval M is 0 mm or smaller, that is, even if the distal end parts of the second weld bead and the third weld bead are in contact with each other or overlap each other, an effect of increasing the fatigue strength is produced. Therefore, the lower limit of the ratio M/N of the interval M and the length N of the extended portion is not particularly provided. Specifically, the ratio M/N of the interval M and the length N of the extended portion may preferably be 0.0 or greater, more preferably 1.0 or greater.

### [Length N of Extended Portion of Second Weld Bead and Extended Portion of Third Weld Bead]

As illustrated in Fig. 3, the extended portion of the second weld bead 5b and the extended portion of the third weld bead 5c each have the length N. The length N of the extended portions is the length from each weld toe part of the first weld bead 5a to the weld terminal end at the distal end of a corresponding one of the second and third weld beads. It is preferable that the length N be 4.0 mm to 60.0 mm for both the second weld bead 5b and the third weld bead 5c. If the length N is smaller than 4.0 mm, no effect of increasing the fatigue life is produced. On the other hand, if the length N exceeds 60.0 mm, the formation of the weld bead is excessive, leading to an increase in the welding cost, which is not preferable. The length N may preferably be 10.0 mm or greater and 50.0 mm or smaller.

### [Fourth Weld Bead 5d]

As illustrated in Figs. 2(a) and 2(b), the fourth weld bead 5d is a weld bead extending along the long edges and a short edge of a rectangular contact surface (hereinafter also referred to as "second rectangular contact surface") at which the bracket 4 is in contact with the tower member 2. The fourth weld bead 5d is intended to join the bracket 4 and the tower member 2 to each other over the entirety of the boundary between the two. Welding that is performed along each of the long edges of the rectangular contact surface (second rectangular contact surface) is vertical welding. To increase the strength of the welded joint over the entirety thereof, it is preferable to provide the fourth weld bead 5d.

From the viewpoint of more effectively producing the above advantageous effect, it is more preferable that a ratio d₅/a₄ between a length a₄ of the short edge of the first rectangular contact surface 4a of the bracket 4 and a length ds of the fourth weld bead 5d in its external dimension in the short-edge direction of the second rectangular contact surface fall within a range of 1.2 to 1.5. For example, the long edges of the second rectangular contact surface of the bracket 4 each have a length of 100 mm to 300 mm, and the short edges of the second rectangular contact surface each have a length of 10 mm to 50 mm.

### [Method of Manufacturing Welded Joint]

Regarding a welding method as a method of manufacturing the welded joint according to the present invention, one embodiment of a specific welding process will now be described with reference to Figs. 4(a) to 4(d). Welding is performed in order from Fig. 4(a).

First, a second member (herein, a tower member 2) is butted against a surface of a first member (herein, a float member 3), and a supporting member (herein, a bracket 4) is placed in contact with the first member and the second member.

Subsequently, the members thus placed are joined to each other by gas-shielded arc welding. Performing welding in order of (a) to (c) provides weld beads included in a welded joint according to the present invention that has features including the above characteristics. To further provide a fourth weld bead for increasing the overall strength of the welded joint as described above, welding (d) is performed after welding (c).
(a) A first weld bead 5a is formed along one of the short edges (one farther from the tower member 2) of the rectangular contact surface 4a at which the bracket 4 is in contact with the float member 3 (see Fig. 4(a)).
(b) A second weld bead 5b is formed along one of the long edges of the rectangular contact surface 4a and is extended over the first weld bead 5a onto the float member 3 (see Fig. 4(b)).
(c) Likewise, a third weld bead 5c is formed along the other of the long edges of the rectangular contact surface 4a and is extended over the first weld bead 5a onto the float member 3 (see Fig. 4(c)).
(d) According to needs, a fourth weld bead 5d is further formed along the long edges and a short edge of the rectangular contact surface at which the bracket 4 is in contact with the tower member 2. Specifically, the fourth weld bead 5d is formed along the two vertical long edges extending on two respective sides of the rectangular contact surface being in contact with the tower member and along the upper short edge (see Fig. 4(d)).

While Figs. 4(a) to 4(d) illustrate only one side of the mock structure 1 of the welded joint, it is preferable that the four weld beads be formed likewise around the bracket provided on the other side (i.e., the opposite side).

### [Welding Conditions for Gas-Shielded Arc Welding]

Exemplary welding conditions for gas-shielded arc welding are as follows.
· Welding current: 200 A to 400 A, welding voltage: 20 V to 50 V, welding speed: 20 cm/min to 40 cm/min
· Shielding gas: mixed gas composed of 80 volume% of CO₂ gas or Ar gas + 20 volume% of CO₂ gas
· Diameter of welding wire: 1.0 mm to 2.0 mm

### EXAMPLES

The present invention will further be described on the basis of examples. Note that the following examples are provided only for more detailed explanation of the present invention and do not limit the scope of the present invention.

First, welded joints simulating the actual structure of a welded joint of a floating offshore wind-power-generation equipment (i.e., mock structures) were made. The sample material for each of the structures was a YP470 material having a plate width of 100 mm. The sample material was taken as a float member of the floating offshore wind-power-generation equipment. A tower member and a bracket made of the same material were prepared. In this case, the dimensions of the float member were 100 mm in plate width; 25 mm in plate thickness; and 800 mm in plate length, the dimensions of the tower member were 100 mm in plate width; 50 mm in plate thickness; and 100 mm in plate length, and the dimensions of the bracket were 200 mm for the long edges of the first rectangular contact surface; 25 mm for the short edges of the first rectangular contact surface; and 250 mm for the long edges of the second rectangular contact surface. A fillet weld was formed to the above members by gas-shielded arc welding with a current of 230 A and a voltage of 30 V and at a speed of 34 cm/min. Thus, welded joints of six kinds were made. The six kinds were one obtained by normal fillet welding (Joint No. 1) and five obtained with the weld beads extended (Joints No. 2 to No. 6). The Young's modulus and the Poisson's ratio as characteristics of the welded joints were measured in accordance with ASTM E8M "Standard Test Methods for Tension Testing of Metallic Materials". The joints of the six kinds all exhibited a Young's modulus E of 206,000 MPa and a Poisson's ratio v of 0.3.

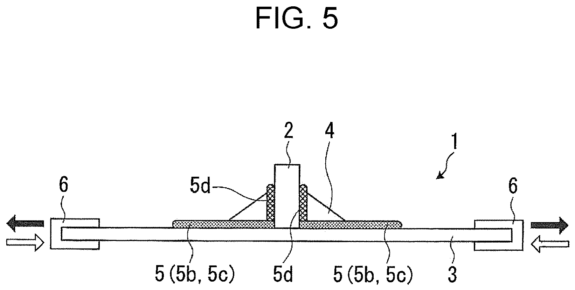

A fatigue test for the welded joints was conducted on respective test pieces of the welded joints. As illustrated in Fig. 5, each of the test pieces was secured by a chuck, which is a securing tool included in a fatigue tester (such as a fatigue-load testing device), and was subjected to fatigue loads (specifically, a tensile force and a compressive force) represented by arrows in the drawing. The range of operating stress was 150 MPa for all of the test pieces. Under such conditions, the number of cycles undergone before breakage was taken as the fatigue life.

The results of the test are summarized in Table 1.

**[Table 1]**

| Joint No. | Interval M between extended weld beads [mm] | Length N of extended portions of extended weld beads [mm] | Ratio M/N of interval M to length N | Range of operating stress [MPa] | Number of cycles to breakage [cycles] | Note |
|---|---|---|---|---|---|---|
| 1 | (No extensions) | (No extensions) | - | 150 | 2.6×10⁵ | Comparative example |
| 2 | 10.0 | 4.8 | 2.1 | 150 | 2.7×10⁵ | Example of present invention |
| 3 | 5.0 | 20.0 | 0.3 | 150 | 3.9×10⁵ | Example of present invention |
| 4 | 1.0 | 60.0 | 0.0 | 150 | 3.8×10⁵ | Example of present invention |
| 5 | 8.0 | 4.0 | 2.0 | 150 | 3.7×10⁵ | Example of present invention |
| 6 | 4.0 | 4.0 | 1.0 | 150 | 3.8×10⁵ | Example of present invention |

Joint No. 1 provided a test result for a comparative example in which normal fillet welding was performed. Joint No. 2 provided a test result for an example of the present invention in which the weld beads were extended such that the ratio M/N of the interval M between the extended weld beads and the length N of the extended portions was 2.1. Joint No. 3 provided a test result for an example of the present invention in which the weld beads were extended such that the ratio M/N of the interval M between the extended weld beads and the length N of the extended portions was 0.3. Joint No. 4 was an example of the present invention in which the weld beads were extended such that the ratio M/N of the interval M between the extended weld beads and the length N of the extended portions was 0.0. Joint No. 5 was an example of the present invention in which the weld beads were extended such that the ratio M/N of the interval M between the extended weld beads and the length N of the extended portions was 2.0. Joint No. 6 was an example of the present invention in which the weld beads were extended such that the ratio M/N of the interval M between the extended weld beads and the length N of the extended portions was 1.0.

Joints No. 2 and thereafter each included the first to fourth weld beads to be subjected to the test.

Regarding the number of cycles to breakage, in the example in which the ratio M/N of the interval M between the extended weld beads and the length N of the extended portions was 2.1 (Joint No. 2), the fatigue strength was slightly greater than in the example in which normal fillet welding was performed (Joint No. 1). On the other hand, in each of the examples in which the ratio M/N of the interval M between the extended weld beads and the length N of the extended portions was 2.0 or smaller (Joints No. 3 to No. 6), the number of cycles to breakage was greater than in the example in which normal fillet welding was performed (Joint No. 1). This shows that extending the weld beads onto the float member produced an effect of increasing the fatigue strength of the welded joint. Moreover, setting the ratio M/N of the interval M between the extended weld beads and the length N of the extended portions to 2.0 or smaller by reducing the interval M between the extended weld beads produced an effect of further increasing the fatigue strength.

### Reference Signs List

1 welded joint (mock structure)
2 tower member
3 float member
4 bracket
4a rectangular contact surface at which bracket is in contact with float member
5 weld bead
5a first weld bead
5b second weld bead
5c third weld bead
5d fourth weld bead
6 chuck (securing tool) included in fatigue-load testing device
M interval (mm) between distal end part of second weld bead and distal end part of third weld bead
N length (mm) of extended portion of second weld bead and extended portion of third weld bead

## Claims

1. A welded joint comprising a first member; a second member butted against a surface of the first member; and a supporting member provided in contact with the first member and the second member,
the welded joint further comprising a first weld bead; a second weld bead; and a third weld bead,
wherein the first weld bead extends along one of short edges of a first rectangular contact surface at which the supporting member is in contact with the first member,
wherein the second weld bead and the third weld bead extend along respective long edges of the first rectangular contact surface and are each extended over a corresponding one of a starting end and a terminal end of the first weld bead onto the first member.

2. The welded joint according to claim 1, wherein a ratio M/N of an interval M between a distal end part of the second weld bead and a distal end part of the third weld bead and a length N of an extended portion of the second weld bead or an extended portion of the third weld bead is 2.0 or smaller.

3. The welded joint according to claim 1 or 2, wherein a length N of an extended portion of the second weld bead and an extended portion of the third weld bead falls within a range of 4.0 mm to 60.0 mm.

4. The welded joint according to claim 1 or 2, further comprising a fourth weld bead extending along long edges and a short edge of a second rectangular contact surface at which the supporting member is in contact with the second member.

5. The welded joint according to claim 1 or 2, to be used as a welded joint of a floating offshore wind-power-generation equipment,
wherein the first member is a float member; the second member is a tower member; and the supporting member is a bracket.

6. A method of manufacturing a welded joint, the welded joint including a first member; a second member butted against a surface of the first member; and a supporting member provided in contact with the first member and the second member,
the welded joint further including a first weld bead; a second weld bead; and a third weld bead,
the method comprising:
forming the first weld bead along one of short edges of a first rectangular contact surface at which the supporting member is in contact with the first member; and
forming the second weld bead and the third weld bead along respective long edges of the first rectangular contact surface and extending each of the second weld bead and the third weld bead over a corresponding one of a starting end and a terminal end of the first weld bead onto the first member.

7. The method of manufacturing a welded joint according to claim 6, wherein a ratio M/N of an interval M between a distal end part of the second weld bead and a distal end part of the third weld bead and a length N of an extended portion of the second weld bead or an extended portion of the third weld bead is 2.0 or smaller.

8. The method of manufacturing a welded joint according to claim 6 or 7, wherein a length N of an extended portion of the second weld bead and an extended portion of the third weld bead falls within a range of 4.0 mm to 60.0 mm.

9. The method of manufacturing a welded joint according to claim 6 or 7,
wherein the welded joint further includes a fourth weld bead,
the method further comprising forming the fourth weld bead along long edges and a short edge of a second rectangular contact surface at which the supporting member is in contact with the second member.

10. The method of manufacturing a welded joint according to claim 6 or 7,
wherein the welded joint is to be used as a welded joint of a floating offshore wind-power-generation equipment, and
wherein the first member is a float member; the second member is a tower member; and the supporting member is a bracket.
